# EUROPEAN PATENT SPECIFICATION

(11) **EP 2 164 663 B1**
(45) Date of publication and mention of the grant of the patent: **30.04.2014**
(21) Application number: 08763211.3
(22) Date of filing: 05.06.2008
(51) Int. Cl.: B23B 35/00, B23B 51/00, B23Q 17/09

(54) **METHOD FOR CONTROLLING A DRILLING MACHINE, AND APPARATUS FOR CARRYING OUT SAID METHOD**
VERFAHREN ZUR STEUERUNG EINER BOHRMASCHINE UND VORRICHTUNG ZUR DURCHFÜHRUNG DES VERFAHRENS
PROCÉDÉ DE COMMANDE D'UNE MACHINE À PERCER, ET APPAREIL POUR LA MISE EN OEUVRE D'UN TEL PROCÉDÉ

(30) Priority: 06.06.2007 IT TO20070395
(43) Date of publication of application: 24.03.2010
(73) Proprietor: Bisiach & Carrù S.p.A., 10078 Venaria Reale (TO) (IT)
(72) Inventor: Bisiach, Bruno, 10078 Venaria (TO) (IT)
(74) Representative: Robba, Pierpaolo
(86) International application number: PCT/IB2008/052212
(87) International publication number: WO 2008/149306

(56) References cited:
- EP-A- 0 400 284
- EP-A- 1 083 025
- WO-A-2006/067398
- US-A- 5 071 294

## Description

The invention concerns a method for controlling a drilling machine and an apparatus for carrying out said method. In particular the present invention refers to a method of the type according the preamble of claim 1, and an apparatus of the type according to the preamble of claim 7

More precisely, the invention concerns a method for controlling a drilling machine for automated execution of precision working cycles, for instance precision drilling cycles, and an apparatus for carrying out said method.

Chipping machine tools, commonly referred to as drilling machines or drills, are known for making cylindrical holes in materials of various kinds and shapes. The tool used in drilling machines is commonly referred to as "bit" and is generally subjected to a rotary cutting motion and a translational feed motion along its longitudinal axis.

Drilling machines are used not only for making holes solid pieces, but also for carrying out, by means of suitable tools, the operations of hole widening, flaring, spot-facing, threading (in which case they are called tapping machines), boring, and so on.

Parameters determining the speed and the quality of hole execution include: the material of which the tool is made, its sharpening conditions, the cutting speed, the feed speed and the presence of a lubricant.

Among the above parameters, it is known that the tool sharpening conditions degrade with use during working. Thus, it may happen that a tool, by which workings perfectly meeting the required parameters and tolerances are initially performed, no longer enables obtaining the same result after a number of working cycles.

Since carrying out a further working cycle with the already worn tool would lead to the attainment of an unacceptable result, whereby a worked piece should possibly be rejected, it is clear that an intervention to replace the tool by a new one or sharpening the tool before carrying out a further working cycle is necessary.

In many applications, where a high quality of the execution of the hole or other workings is not required and use of even non-perfectly sharpened tools is therefore tolerated, often an empirical intervention will be sufficient, by replacing the tool after a given number of holes, for instance statistically estimated or estimated based on periodical visual evaluations of the tool conditions.

In other applications, especially in very high precision applications or in applications where the hole is drilled in very expensive materials or where a very high number of holes are drilled, so that rejection of a piece due to a working error would have serious economical consequences, it is on the contrary necessary to operate always with perfectly sharpened tools, i.e. tools whose sharpening conditions are substantially the same as the initial conditions of a new tool.

This need entails a very frequent tool replacement, even after few tens of holes or in some cases even after a few holes, with a resulting cost increase and throughput decrease.

In some fields of application, for instance in aeronautical and aerospace industry, where it is necessary to drill several thousand holes in special materials, e.g. carbon alloys or composite materials associated with a titanium layer, by means of very expensive tools, for the subsequent assembling through riveting, the procedure described above has the drawback of demanding on the one hand a very long time for carrying out the working cycles, since it is necessary to frequently stop the drilling machine in order to replace the tool, and on the other hand a very early tool replacement, in order to prevent a whole very expensive workpiece, in which a very high number of working cycles has been already performed, from being damaged even by a single operation, e.g. a low quality hole.

In this field the need is also known to drill several holes in composite materials, formed for instance of superimposed sheets. Materials of such kind include for instance pieces obtained by superimposing convex sheets, namely an external carbon sheet and an internal titanium sheet, for building aircraft fuselages. Coupling of the two sheets is carried out by riveting and thus it is necessary to previously perform drilling.

The holes to be drilled into the composite material require use of special tools capable of both drilling the hole and forming the external flare in the carbon layer for accommodating the rivet head, which has to be perfectly flush with the fuselage surface.

Due to the characteristics of the material, drilling of the carbon layer is moreover generally performed at a much higher speed than drilling of the titanium layer, typically 20,000 rpm for carbon and about 1,000 rpm for titanium. Also the feed speeds are very different, since carbon drilling is rather quick, typically of the order of at least 2,000 mm/min, and titanium drilling is rather slow, typically of the order of 50 mm/min.

Moreover, the rotation speed of the tool also changes during flaring, where it attains about 500 rpm. Actually, since in this phase the drilling bit has already partly gone out from the titanium layer, a higher flaring speed would result in the danger of melting titanium, with the consequent risk of burrs in the hole that has been just made.

Clearly, in the above application, but not only there, it is necessary to determine the optimum depth at which the rotation and feed speeds are to be changed, in such a manner that the hole in the carbon layer is drilled at the optimum speed, the speed is subsequently reduced when the titanium layer is reached, and then the speed is further reduced for the final flaring step.

WO 2006/067398 relates to an example of a method and an apparatus of the above specified type. Such document discloses a machine tool control method employing a machine tool for carrying out a work producing process having a cutting implement for machining a workpiece according to the process. The cutting implement comprises a first part having a shank and a second part having a cutting surface and, optionally a tool holder, a sensor device provided on the second part of the cutting implement for sensing at least one condition of the process, and a machine controller. The method comprises: operating the machine under the control of the machine controller to cause a process to commence, sensing at least one condition of the process, and adapting controller or sensor based cutting pararmeters during the process in accordance with the sensed condition. The cutting implement may be changeable during the process. The process can be a single cutting operation. Sensor based parameters can be adapted independently of the machine controller.

US 5,071,294 discloses a burnishing drill including a cylindrical drill body connected at its forward end integrally with a shank. The forward end of the drill body includes a first pair of cutting edges inclined radially and rearwardly from the forwardmost central end of the drill body toward the shank at a first cutting angle. A second pair of cutting edges formed of diamond chips are disposed in a plane intersecting the plane in which the first pair of cutting edges are located. The second pair of cutting edges are inclined radially and rearwardly from a position inside a circle including the maximum external margins of the first pair of cutting edges toward the shank at a second cutting angle.

EP 0400284 discloses an automated drilling station for use in a computer controlled manufacturing system comprising: an adjustable frame structure for releasably clamping a work piece in a planar work position, a chuck assembly adapted to operatively receive a selected drill bit, a drive train for selectively moving the chuck assembly on an axis perpendicular to the plane of the work position, feed racks for storing a plurality of drill bits of various predetermined sizes, a robot assembly for transferring a selected drill bit between the feed racks and the chuck assembly at a transfer station remote from the work position; a drive train for selectively translating the chuck assembly between the transfer station and work position and between locations on one side of the work piece aligned with predetermined drill points in the work position and a selectively rotatable turret having bushings of various sizes disposed about the periphery thereof for selective disposition in opposed relation to the chuck assembly at each predetermined drill point.

EP 1083025 discloses an abnormality detection apparatus for a tool. This apparatus is intended for judging abnormalities of a tool by a uniformly set threshold value in relation to a cutting load even in a machining process wherein a feed rate changes every moment. The abnormality detection apparatus comprises cutting a load detecting device to detect a cutting load on the basis of an electric current for driving that is output to a feed drive system and/or an electric current for driving that is output to a spindle drive system; a feed load estimating device to estimate a feed load according to the feed rate wherein the feed load depends on the feed rate; a tool load detecting device, to pick out a load component depending on the tool by reducing the feed load data estimated by the feed load estimating device from the cutting load data detected by the cutting load detecting device; and an abnormality judging device to judge whether the tool is in an abnormal condition or not on the basis of the load data picked out by the tool load detecting device. The abnormalities of the tool can be judged by the uniformly set threshold value on the basis of the tool load wherefrom the feed load that fluctuates upon the feed rate has been removed.

Document EP 1329270 discloses a robotised apparatus that can be used for instance in aeronautical industry for drilling holes in materials of the above kind by means of a drilling machine.

Thus, it is an object of the present invention to provide a method and an apparatus for executing precision working cycles, which method and apparatus enable solving the problem of how to determine the variation in the quality of the result that has been or is being obtained, with respect to a desired quality.

It is a second object of the present invention to provide a method and an apparatus that enable determining the wear conditions of the tool, in particular of a drill bit.

It is a third object of the present invention to provide a method and an apparatus that enable replacing the tool only when its sharpening conditions no longer meet the desired requirements.

It is a fourth object of the present invention to provide a method and an apparatus that enable determining the optimum depth at which the rotation and feed speeds are to be changed during a working performed with mixed tools simultaneously carrying out two or more workings.

It is a further, but not the last, object of the present invention to provide the above method and apparatus so that they are easy and cheap to implement in drilling machines at present in use.

The above and other objects are achieved by the method and the apparatus as claimed in the appended claims.

Advantageously, thanks to the measurement of the change in the load applied to the workpiece, it is possible to determine the conditions, and hence the execution quality, of the working cycle.

Moreover, thanks to the evaluation of said load change, it is possible to determine the wear conditions of the tool, for instance a drill bit, and consequently its sharpening conditions, thus allowing replacing the tool only when this is actually necessary, e. g. for preventing attainment of low quality workings and high costs due to the early tool replacement.

Advantageously, it is also possible to carry out the method of the invention in a conventional drilling machine, even of robotised type, especially of the type used for instance in aeronautical and aerospace industry, without substantial modifications to the machine structure.

A detailed description of an exemplary embodiment of the invention will be provided below with particular reference to the accompanying drawings, in which:
- Fig. 1 is a schematic overall view of an apparatus according to the invention;
- Fig. 2 is a front view of a detail of the apparatus shown in Fig. 1, according to a preferred embodiment of the invention;
- Fig. 3 is an enlarged view, partly in cross section, of a detail of the apparatus shown in Fig. 2 during a working cycle;
- Fig. 4 is a schematic view of a load cell;
- Figs. 5a to 5e are as many schematic views of the tool position in an exemplary application;
- Fig. 6 is a graph of the load variation measured during working in the exemplary application of Figs. 5a to 5d;
- Fig. 7 is a schematic block diagram of the circuit processing the signal from the load cells.

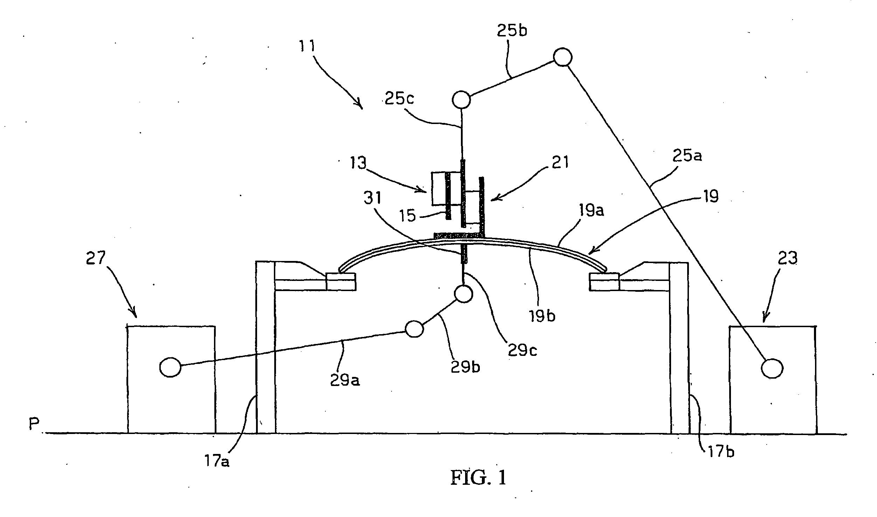

Referring to Fig. 1, an apparatus 11 according to the invention is schematically shown. The apparatus comprises a drill 13 equipped with a tool 15, which in the illustrated example is a bit for simultaneous drilling and flaring, a support 17a, 17b with which a workpiece 19 is associated, and a load 21 applied to workpiece 19 to be drilled. The load is preferably arranged at or near the area where the hole is to be drilled and on the same face of workpiece 19 as that on which tool 15 will start working.

In the illustrated example, workpiece 19 comprises, for instance, a pair of superimposed convex sheets 19a, 19b, which are to be joined by riveting after having been drilled. Said sheets, in case of aeronautical and aerospace applications, can be for instance a first, outer sheet 19a made of carbon and a second, inner sheet 19b made of titanium.

Still referring to Fig. 1, in the illustrated example, apparatus 11 according to the invention is associated with a robotised equipment comprising a first anthropomorphic robot 23 having a plurality of mutually articulated arms 25a, 25b, 25c, and a second anthropomorphic robot 27. The first robot is referred to as "outer robot" with respect to the workpiece and has associated therewith drill 13 and load 21. The second robot, which is referred to as "inner robot" with respect to the workpiece, has a plurality of mutually articulated arms 29a, 29b, 29c and has associated therewith a contrast member 31. The latter is preferably positioned by inner robot 27 at or near the area where the hole is to be drilled and on the face of workpiece 19 opposite to that on which tool 15 will start working.

Inner and outer robots 23 and 27 are moreover firmly secured, directly or through a supporting structure that can also include guideways for the displacement of the robots relative to the workpiece and vice versa, to a floor P on which also support 17a, 17b for workpiece 19 to be drilled is supported directly or through a corresponding structure.

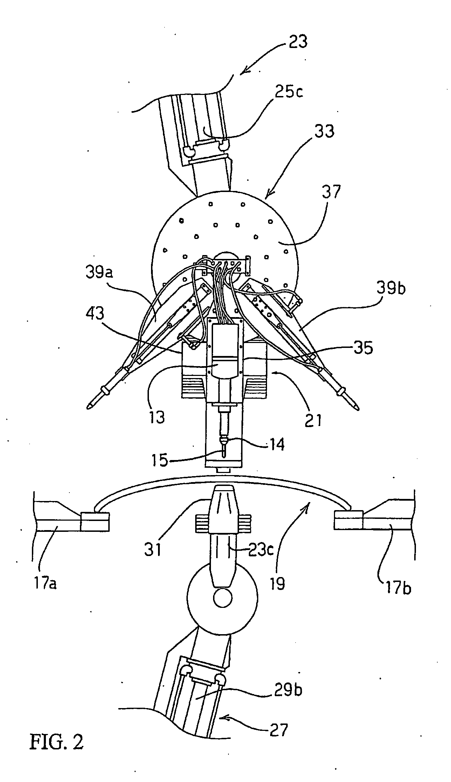

Turning now to Fig. 2, there is shown a preferred embodiment of the invention in which drill 13, equipped with a mandrel 14 and tool 15, is associated with head 33 of outer robot 23 by means of a first guide 35, which is slidable along a direction generally parallel to rotation axis of mandrel 14 and is preferably mounted on a revolving table 37. A set of tools 39a, 39b performing other workings, such as riveting, injection of sealing material into the hole, etc., are radially mounted on said table jointly with drill 13.

Always referring to the embodiment shown in Fig. 2, load 21 too is preferably associated with head 33 of outer robot 23, by means of a second guide 35, which is slidable along a direction preferably parallel to the sliding direction of the first guide and is also preferably mounted on revolving table 37, parallel to the first guide 35 but independently thereof, so that drill 13 and load 21 can be separately made to slide relative to table 37.

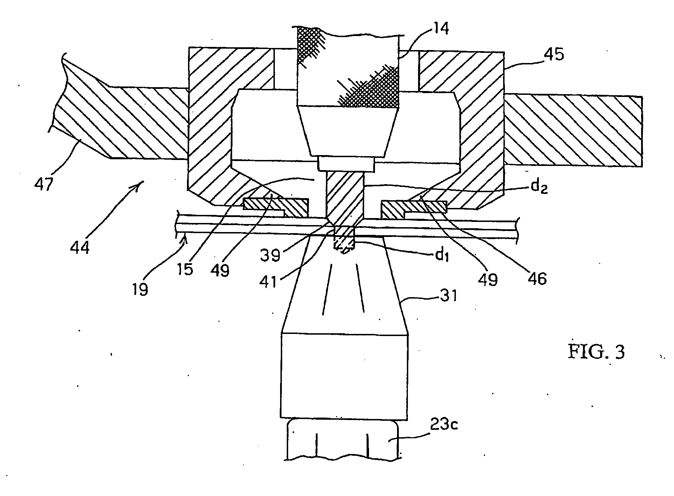

Turning now to Fig. 3, there is better shown the drilling area, where tool 15, in the illustrated example a drill bit with double diameter d1 < d2, which therefore carries out also the flaring of initial portion 40 of hole 41, is located at the end of the drilling step. There, the bit is surrounded by supporting foot 44 to which load 21 is applied.

In the illustrated example, supporting foot 44 includes a centrally bored plate 45 associated with a bracket 47 mounted on guide 43, which is directly supported by the robot head or is supported through the interposition of the revolving table.

Advantageously, according to the invention, plate 45 includes a supporting member 46 associated with plate 45 through the interposition of at least one transducer device 49 capable of changing, depending on the intensity of the load to which it is subjected, at least one of the parameters into an electric signal applied to or generated by the transducer. According to the invention, four transducers 49 are provided, arranged at the corners of a square whose centre is located at the axis of tool 15.

Transducers suitable for the purpose are for instance the so-called load cells. A load cell is actually an electronic device (transducer) used for converting a force, for instance a reaction to the thrust exerted by load 21 against workpiece 19, into an electric signal. The conversion generally takes place in two steps: through a mechanical arrangement, the force is converted into the deformation of a strain gauge, which in turn converts the mechanical deformation into an electric signal.

The load cells are in turn connected to an electronic circuit generally including also a power supply, a signal amplifier and a detecting instrument (an indicator or a recorder). Moreover, the amplified signal is generally processed by an algorithm for calculating the force applied to the transducer.

Resistive load cells (strain gauges), i.e. cells capable of changing their electric resistance depending on the applied load, are among the most widely used cells, due to their facility of use and versatility.

An example of load cell is disclosed in document US 903,973, which discloses an axial compression load cell. By applying an electric current to the cell, the output signal has an intensity proportional to the force axially applied to the cell head.

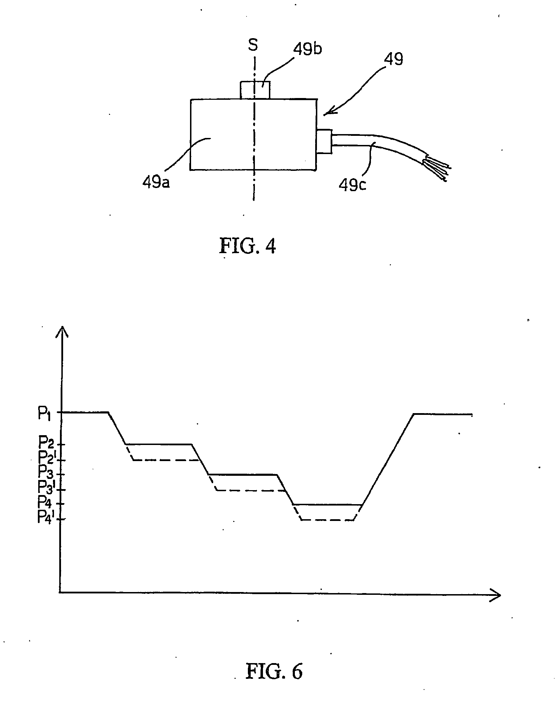

Referring to Fig. 4, there is shown an example of a transducer 49 consisting of a load cell including a body 49a, a head 49b and an electric cable connecting the cell to the electronic control circuit which, for instance, compares the load variations with predetermined thresholds in order to determine the tool wear and/or the level of the working progress.

In the illustrated example, the load cell can be subjected to a compression in axial direction relative to control axis S, thereby obtaining a proportional variation in the electric signal.

Preferably, the cell is arranged so that axis S is parallel to the tool feed axis and hence to the axis along which the load is applied to the workpiece.

The load that can be applied to load cell like the illustrated one can be some hundred kilograms, e.g. 500 Kg, and thus such kind of device is particularly suitable for use in the apparatus according to the invention, where loads of the order of 100 Kg, for instance 130 Kg, are to be applied.

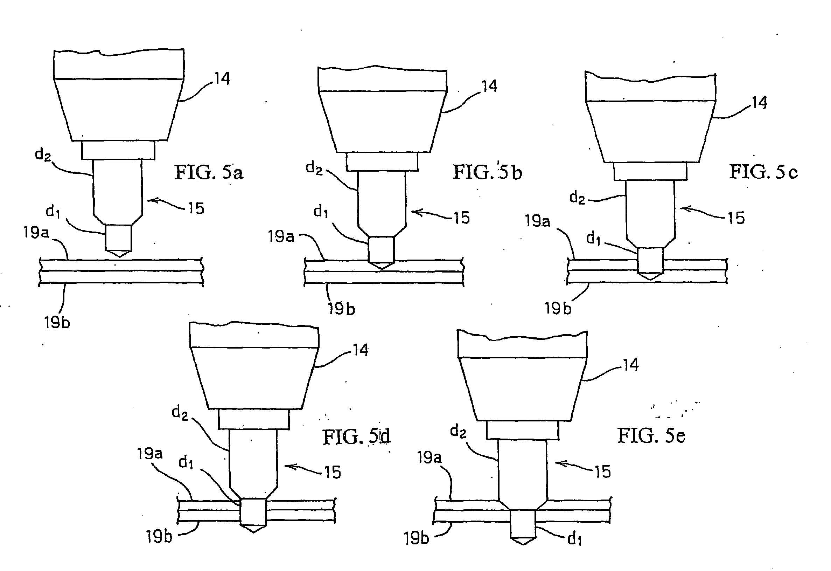

Turning to Figs. 5a to 5e, where load 21 has been removed for the sake of simplicity, the tool position is shown in the five steps of a working cycle comprising a drilling phase and a subsequent flaring phase carried out by means of a same tool onto double layer material 19.

More particularly, Fig. 5a shows tool 15 before working starts, Fig. 5b during drilling of the first layer 19a, which can be for instance of carbon or carbon-based composite material, Fig. 5c during drilling of the second layer 19b, which can be for instance of titanium or a titanium alloy, Fig. 5d at the beginning of the flaring phase and Fig. 5e at the end of the flaring phase.

Referring also to Fig. 6, the load variation measured by the load cells associated with supporting foot 44 is shown. The load applied to the workpiece before drilling starts is denoted P₁ and can be for instance about 100 Kg. During drilling of the first layer 19a (for instance of carbon) the measured load will decrease to a value P₂ < P₁, because of the reaction due to the thrust for feeding tool 15 into the material of the first layer 19a.

During drilling of the second layer 19b (for instance of titanium), the measured load will change to a value P₃, which is generally different from P₂ and can be higher or lower than P₂ depending on the composition of the material of the second layer. In the example illustrated in Fig. 6, it has been assumed that the material of the second layer entails a further load reduction due to the higher resistance to the feed of tool 15, whereby P₃ < P₂ < P₁.

Finally, during flaring, the load attains a value P₄, which is generally different from P₂ and P₃ and depends on the composition of the material of the first layer. In the example illustrated in Fig. 6, it has been assumed that the flaring phase entails a further load reduction due to the greater resistance to the tool feed while the first layer is being flared, whereby P₄ < P₃ < P₂ < P₁.

Advantageously, the invention is based on the principle that a variation in the force applied to the workpiece and measured by the load cells is representative of a variation in the working conditions of the tool, for instance a drilling and flaring bit like that shown for instance in Fig. 3.

Actually, if a load P₁, for instance 100 Kg, is applied to the workpiece before drilling starts, a reduction of such load to a value P₂ < P₁, determined by the load applied by the drill on the bit and by the material resistance to the bit penetration, will be noticed when drilling starts.

If the bit used for drilling is perfectly sharpened and the load applied by the drill is adequate to the drilling power, such value P₂ will be little different from starting value P₁. If on the contrary the bit is worn, a sudden reduction of the load applied to the workpiece will take place, in the example even by some tens of kilograms, so that P₂' << P₂ < P₁. Similarly, values P₃' and P₄', respectively, taken in the subsequent working steps can be significantly different from those obtained by using a sharpened tool.

Therefore, according to the invention, the drastic reduction, or a decrease below a predetermined threshold, of the load applied to the workpiece can be advantageously exploited not only for determining the current phase in the working cycle, i.e. the stage of working progress, but also to determine the wear conditions of the tool and to decide whether the tool is to be replaced before drilling the subsequent hole.

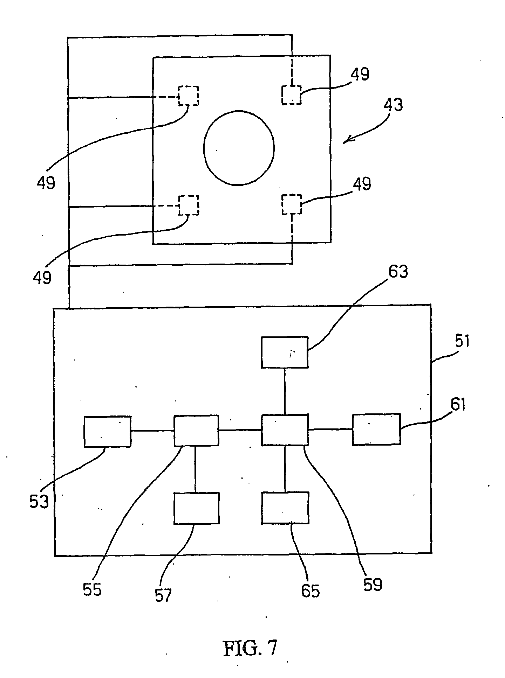

Turning now to Fig. 7, there is shown a block diagram of the circuit processing the electric signal from load cells 49.

Fig. 7 shows four load cells 49 located at the supporting foot 44. Load cells 49 are connected to a signal processing electronic circuit 51 including: a unit 53 for computing an average of the values obtained from the individual cells, so as to obtain a single average load value (this unit is optional, since even a single load cell can be provided and, moreover, the signal can be differently processed, for instance by differently weighing the values obtained from the individual cells); a comparator 55 for comparing the average load value with predetermined thresholds, e.g. values P₂, P₃ and P₄, measured during a working cycle carried out with a new tool and stored in a storage unit 57; a control device 59 for controlling, depending of the result of the comparison, either the choice of the speed suitable for the working in progress, e.g. a speed V₁ for the first layer, V₂ for the second layer, V₃ for the flaring, in a working speed selection unit 61, or the working stop cycle in a stopping unit 63, or the tool replacement cycle in a replacement unit 65, or an alarm signal, etc.

All said units, or some of them, can also advantageously be integrated into a single electronic device, such as an electronic processor.

## Claims

1. A method of controlling a drilling machine, comprising the steps of:
- providing a drilling machine (13);
- equipping said machine (13) with a tool (15);
- providing a workpiece (19);
- associating said workpiece (19) with a support (17a, 17b);
- applying a load (21) to said workpiece (19);
- working said workpiece by means of said tool (15); and
- measuring the load variations induced by the workpiece resistance to the working;
the method being **characterised in that** it further comprises the following steps:
- providing a supporting foot (44);
- applying said load (21) to said workpiece (19) by means of said foot (44);
- supporting said drilling machine (13) by a first guide (35) along which said tool (15) is fed during the corresponding working step of said drilling machine (13); and
- supporting said foot (44) by a second guide (43) slidable along an advance direction generally parallel to an advance direction of said first guide (35),
wherein said tool (15) is a drill bit with double diameter.

2. The method as claimed in claim 1, further comprising a step of measuring said load variations by means of at least one transducer (49) associated with said foot (44).

3. The method as claimed in claim 2, further comprising the step of measuring said load variation by means of four transducers (39) associated with said foot (44) arranged at the corners of a square whose center is located at the axis of said tool (15).

4. The method as claimed in any of the preceding claims, further comprising a step of applying said load (21) at or near the area where the hole is to be drilled and on the same face of said workpiece (19) as that on which said tool (15) is intended to start working.

5. The method as claimed in claim 4, further comprising the step of making said foot (44) to surround said tool (15).

6. The method as claimed in any of the preceding claims, further comprising a step of comparing said load variations with predetermined thresholds in order to perform one or more of the following steps:
- determining the stage of working progress;
- determining the tool wear; and
- changing the tool rotation speed depending on the result of the comparison step.

7. An apparatus for controlling a drilling machine. comprising:
- a drilling machine (13);
- a tool (15) equipping said machine;
- a support (17a, 17b) associable with a workpiece;
- a load (21); and
- a device for measuring the load variations induced by the workpiece resistance to the working;
the apparatus being **characterised in that** it further comprises a supporting foot (44) by means of which said load (21) is able to be applied to said workpiece (19),
wherein said tool (15) is a drill bit with double diameter, said drilling machine (13) is supported by a first guide (35) along which said tool (15) is able to be fed during the corresponding working step of said drilling machine (13), and wherein said foot (44) is supported by a second guide (43) slidable along an advance direction generally parallel to an advance direction of the first guide (35).

8. The apparatus as claimed in claim 7, wherein said device comprises at least one transducer (49) associated with said foot (44).

9. The apparatus as claimed in claim 8, wherein said at least one transducer comprises a load cell (49).

10. The apparatus as claimed in claim 7 or 8, wherein said device comprises four transducers (39) associated with said foot (44) arranged at the corners of a square whose center is located at the axis of said tool (15).

11. The apparatus as claimed in any of the claims 7 to 10,wherein said load (21) is intended to be applied at or near the area where the hole is to be drilled and on the same face of said workpiece (19) as that on which said tool (15) is intended to start working.

12. The apparatus as claimed in claim 11, wherein said foot (44) is able to surround said tool (15).

13. The apparatus as claimed in claim 12, wherein said supporting foot (44) comprises a centrally bored plate (45) able to surround said tool (15) and associated to a bracket (47) mounted on said second guide (43).

14. The apparatus as claimed in claim 13 when depending on claim 8, wherein said plate (45) comprises a supporting member (46) and said at least one transducer (49) interposed between said supporting member (46) and the rest of said plate (45).

## Patentansprüche

1. Verfahren zum Steuern einer Bohrmaschine mit den Schritten
- Bereitstellen einer Bohrmaschine (13);
- Ausrüsten der Maschine (13) mit einem Werkzeug (15);
- Bereitstellen eines Werkstücks (19);
- Verbinden des Werkstücks (19) mit einem Träger (17a, 17b);
- Aufbringen einer Last (21) auf das Werkstück (19);
- Bearbeiten des Werkstücks mit dem Werkzeug (15); und
- Messen der Laständerungen, die durch den Widerstand verursacht werden, den das Werkstück der Bearbeitung entgegensetzt;
wobei das Verfahren **dadurch gekennzeichnet ist, dass** es zusätzlich die folgenden Schritte aufweist:
- Bereitstellen eines unterstützenden Sockels (44);
- Aufbringen der Last (21) auf das Werkstück (19) mittels des Sockels (44);
- Unterstützen der Bohrmaschine (13) durch eine erste Führung (35), entlang welcher das Werkzeug (15) geführt wird, während der entsprechende Bearbeitungsschritt der Bohrmaschine (13) durchgeführt wird; und
- Unterstützen des Sockels (44) mit einer zweiten Führung (43) verschiebbar entlang einer Vorschubrichtung, die im Wesentlichen parallel zu einer Vorschubrichtung der ersten Führung (35) ist,
- wobei das Werkzeug (15) ein Stufenbohrer ist.

2. Verfahren nach Anspruch 1, zusätzlich umfassend einen Schritt des Messens der Lastschwankungen mittels wenigstens eines Messwertgebers (49) der dem Sockel (44) zugeordnet ist.

3. Verfahren nach Anspruch 2, zusätzlich umfassend den Schritt des Messens der Lastvariationen mittels vier Messwertgebern (39), die dem Sockel (44) zugeordnet in den Ecken eines Quadrats angeordnet sind, dessen Zentrum in der Achse des Werkzeugs (15) liegt.

4. Verfahren nach einem der vorstehenden Ansprüche, zusätzlich umfassend einen Schritt des Aufbringens der Last (21) an oder nahe der Stelle, an der das Loch gebohrt werden soll, und auf der Seite des Werkstücks (19), auf welcher auch das Werkzeug (15) mit der Bearbeitung beginnen soll.

5. Verfahren nach Anspruch 4, zusätzlich umfassend den Schritt, das Werkzeug (15) mit dem Sockel (44) zu umgeben.

6. Verfahren nach einem der vorstehenden Ansprüche, zusätzlich umfassend einen Schritt des Vergleichens der Lastschwankungen mit vorgegebenen Schwellenwerten, um einen oder mehrere der folgenden Schritte durchzuführen:
- Bestimmen des Stadiums des Arbeitsvorschrittes
- Bestimmen der Werkzeugabnutzung; und
- Ändern der Werkzeugdrehzahl in Abhängigkeit von dem Ergebnis des Vergleichsschritts.

7. Vorrichtung zum Steuern einer Bohrmaschine, mit:
- einer Bohrmaschine (13);
- einem Werkzeug (15), mit dem die Maschine ausgerüstet ist;
- einem Träger (17a, 17b), der mit einem Werkstück verbunden werden kann;
- einer Last (21); und
- einer Einrichtung zum Messen von Lastvariationen, die durch den Widerstand verursacht werden, den das Werkstück der Bearbeitung entgegensetzt;
wobei die Vorrichtung **dadurch gekennzeichnet ist, dass** sie zudem einen unterstützenden Sockel (44) aufweist, mit welchem die Last (21) auf das Werkstück (19) aufgebracht werden kann,
wobei das Werkzeug (15) ein Stufenbohrer ist, die Bohrmaschine (13) von einer ersten Führung (35) gestützt wird, entlang welcher das Werkzeug (15) verschoben werden kann, während des entsprechenden Arbeitsschrotts der Bohrmaschine (13), und wobei der Sockel (44) von einer zweiten Führung (43) verschiebbar entlang einer Vorschubrichtung unterstützt wird, die im Wesentlichen parallel zu einer Vorschubrichtung der ersten Führung (35) verläuft.

8. Vorrichtung nach Anspruch 7, wobei die Vorrichtung wenigstens einen Messwertgeber (49) aufweist, der dem Sockel (44) zugeordnet ist.

9. Vorrichtung nach Anspruch 8, wobei der wenigstens eine Messwertgeber eine Kraftmesszelle (49) aufweist.

10. Vorrichtung nach Anspruch 7 oder 8, wobei die Vorrichtung vier Messwertgeber (39) aufweist, die dem Sockel (44) zugeordnet in den Ecken eines Quadrats angeordnet sind, dessen Zentrum in der Achse des Werkzeugs (15) liegt.

11. Vorrichtung nach einem der Ansprüche 7 bis 10, wobei die Last (21) dafür vorgesehen ist, auf oder in die Nähe der Stelle aufgebracht zu werden, an der das Loch gebohrt werden soll, und auf derselben Seite des Werkstücks (19), auf der auch das Werkzeug (15) mit der Bearbeitung beginnen soll.

12. Vorrichtung nach Anspruch 11, wobei der Sockel (44) dafür vorgesehen ist, das Werkzeug (15) zu umgeben.

13. Vorrichtung nach Anspruch 12, wobei der stützende Sockel (44) eine zentral durchbohre Platte (45) aufweist, die das Werkzeug (15) umgeben kann und einer Klammer (47) zugeordnet ist, die auf der zweiten Führung (43) montiert ist.

14. Vorrichtung nach Anspruch 13 in Abhängigkeit von Anspruch 8, wobei die Platte (45) ein Stützglied (46) aufweist und der wenigstens eine Messwertgeber (49) zwischen dem Stützglied (46) und dem Rest der Platte (45) angeordnet ist.

## Revendications

1. Procédé de commande d'une machine à percer, comprenant les étapes consistant à :
- fournir une machine à percer (13) ;
- équiper ladite machine (13) d'un outil (15) ;
- utiliser une pièce d'oeuvre (19) ;
- associer ladite pièce d'oeuvre (19) à un support (17a, 17b) ;
- appliquer une charge (21) à ladite pièce d'oeuvre (19) ;
- usiner ladite pièce d'oeuvre au moyen dudit outil (15) ; et
- mesurer les variations de charge induites par la résistance à l'usinage de la pièce d'oeuvre;
le procédé étant **caractérisé en ce qu'**il comprend en outre les étapes suivantes consistant à :
- réaliser un pied de support (44) ;
- appliquer ladite charge (21) à ladite pièce d'oeuvre (19) au moyen dudit pied (44) ;
- supporter ladite machine à percer (13) au moyen d'un premier guide (35) le long duquel ledit outil (15) avance pendant l'étape d'usinage correspondante de ladite machine à percer (13) ; et
- supporter ledit pied (44) au moyen d'un second guide (43) pouvant coulisser dans une direction de progression globalement parallèle à une direction de progression dudit premier guide (35),
ledit outil (15) étant un foret à deux diamètres.

2. Procédé selon la revendication 1, comprenant en outre une étape consistant à mesurer lesdites variations de charge au moyen d'au moins un transducteur (49) associé audit pied (44).

3. Procédé selon la revendication 2, comprenant en outre l'étape consistant à mesurer ladite variation de charge au moyen de quatre transducteurs (39) associés audit pied (44) disposés au niveau des angles d'un carré dont le centre est situé au niveau de l'axe dudit outil (15).

4. Procédé selon l'une quelconque des revendications précédentes, comprenant en outre une étape consistant à appliquer ladite charge (21) au niveau de la zone où le trou doit être foré, ou à proximité de cette dernière, et sur la même face de ladite pièce d'oeuvre (19) que celle sur laquelle ledit outil (15) doit commencer l'usinage.

5. Procédé selon la revendication 4, comprenant en outre l'étape consistant à faire que ledit pied (44) entoure ledit outil (15).

6. Procédé selon l'une quelconque des revendications précédentes, comprenant en outre une étape consistant à comparer lesdites variations de charge avec des seuils prédéterminés afin d'exécuter une ou plusieurs des étapes suivantes consistant à :
- déterminer le niveau de progression d'usinage ;
- déterminer l'usure d'outil ; et
- modifier la vitesse de rotation de l'outil en fonction du résultat de l'étape de comparaison.

7. Appareil de commande d'une machine à percer, comprenant :
- une machine à percer (13) ;
- un outil (15) équipant ladite machine ;
- un support (17a, 17b) pouvant être associé à une pièce d'oeuvre;
- une charge (21) ; et
- un dispositif permettant de mesurer les variations de charge induites par la résistance à l'usinage de la pièce d'oeuvre;
l'appareil étant **caractérisé en ce qu'**il comprend en outre un pied de support (44) au moyen duquel ladite charge (21) peut être appliquée à ladite pièce d'oeuvre (19),
dans lequel ledit outil (15) est un foret à deux diamètres, ladite machine à percer (13) est supportée par un premier guide (35) le long duquel ledit outil (15) peut avancer lors de l'étape d'usinage correspondante de ladite machine à percer (13) et dans lequel ledit pied (44) est supporté par un second guide (43) pouvant coulisser dans une direction de progression globalement parallèle à une direction de progression du premier guide (35).

8. Appareil selon la revendication 7, dans lequel ledit dispositif comprend au moins un transducteur (49) associé audit pied (44).

9. Appareil selon la revendication 8, dans lequel ledit au moins un transducteur comprend un dispositif de mesure de force (49).

10. Appareil selon la revendication 7 ou 8, dans lequel ledit dispositif comprend quatre transducteurs (39) associés audit pied (44) disposés au niveau des angles d'un carré dont le centre est situé au niveau de l'axe dudit outil (15).

11. Appareil selon l'une quelconque des revendications 7 à 10, dans lequel ladite charge (21) est prévue pour une application au niveau de la zone où le trou doit être foré, ou à proximité de cette dernière, et sur la même face de ladite pièce d'oeuvre (19) que celle sur laquelle ledit outil (15) doit commencer l'usinage.

12. Appareil selon la revendication 11, dans lequel ledit pied (44) peut entourer ledit outil (15).

13. Appareil selon la revendication 12, dans lequel ledit pied de support (44) comprend une plaque à trou central (45) pouvant entourer ledit outil (15) et associée à une potence (47) montée sur ledit second guide (43).

14. Appareil selon la revendication 13 lorsqu'elle dépend de la revendication 8, dans lequel ladite plaque (45) comprend un élément de support (46) et ledit au moins un transducteur (49) interposé entre ledit élément de support (46) et le reste de ladite plaque (45).
